# EUROPÄISCHE PATENTSCHRIFT

(11) **EP 1 414 692 B1**
(45) Veröffentlichungstag und Bekanntmachung des Hinweises auf die Patenterteilung: **13.09.2006**
(21) Anmeldenummer: 02751163.3
(22) Anmeldetag: 26.07.2002
(51) Int. Cl.: B62D 15/02

(54) **FAHRER-ASSISTENZSYSTEM UND VERFAHREN ZU DESSEN BETRIEB**
DRIVER-ASSIST SYSTEM AND METHOD FOR OPERATION THEREOF
SYSTEME D'AIDE A LA CONDUITE POUR CONDUCTEURS ET PROCEDE PERMETTANT DE LE FAIRE FONCTIONNER

(30) Priorität: 01.08.2001 DE 10137292
(43) Veröffentlichungstag der Anmeldung: 06.05.2004
(73) Patentinhaber: Continental Teves AG & Co. oHG, 60488 Frankfurt am Main (DE); A.D.C. Automotive Distance Control Systems GmbH, 88131 Lindau (Bodensee) (DE)
(72) Erfinder: BÖHM, Jürgen, 65558 Oberneisen (DE); NELL, Joachim, 63452 Hanau (DE); GEDULD, Georg, CH-9453 Eichberg (CH)
(86) Internationale Anmeldenummer: PCT/EP2002/008365
(87) Internationale Veröffentlichungsnummer: WO 2003/013940

(56) Entgegenhaltungen:
- DE-A- 19 841 706
- GB-A- 2 345 895
- PATENT ABSTRACTS OF JAPAN vol. 2000, no. 24, 11. Mai 2001 (2001-05-11) -& JP 2001 187582 A (KOYO SEIKO CO LTD), 10. Juli 2001 (2001-07-10)

## Beschreibung

Die Erfindung betrifft ein Verfahren zum Betreiben eines Fahrer-Assistenzsystems eines Fahrzeugs, insbesondere eines Kraftfahrzeugs, mit einer servounterstützten Lenkung, bei dem Umgebungsdaten einer momentanen Verkehrssituation erfasst oder abgeschätzt werden, momentane Bewegungsdaten des Fahrzeugs erfasst oder abgeschätzt werden und die erfassten oder abgeschätzten Umgebungsdaten mit den Bewegungsdaten des Fahrzeugs verglichen werden.

Die Erfindung betrifft ebenso ein Fahrer-Assistenzsystem eines Fahrzeugs, insbesondere eines Kraftfahrzeugs, mit einer servounterstützten Lenkung, das ein Erfassungsmittel zum Erfassen oder Abschätzen von Umgebungsdaten einer momentanen Verkehrssituation, vorzugsweise des Fahrbahnverlauferfassungsmittel, und ein Erfassungsmittel zum Erfassen oder Abschätzen von momentanen Bewegungsdaten des Fahrzeugs, vorzugsweise ein Fahrzeugkurserfassungsmittel, ein Vergleichsmittel zum Vergleichen der erfassten oder abgeschätzten Umgebungsdaten mit den Bewegungsdaten des Fahrzeugs, und ein Lenkradunterstützungs-Beeinflussungsmittel zur Änderung der Unterstützung einer fahrerbetätigbaren Lenkhandhabe nach Maßgabe des Vergleichs aufweist.

Der Fahrer steuert die Bewegung eines Fahrzeugs gemäß einem einzuhaltenden Weg. Dieses geschieht hauptsächlich über die Lenkung des Fahrzeugs. Ist der Fahrer unaufmerksam, kann das Fahrzeug vom Weg abweichen. Um diesem entgegenzuwirken, sind verschiedene Fahrer-Assistenzsysteme bekannt, die direkt in die Lenkung eines Fahrzeugs eingreifen.

Aus der DE 196 35 009 A1 ist beispielsweise ein Verfahren bekannt, um ein zukünftiges Fahrzeugverhalten oder einen zukünftigen Zustand aus dem aktuellen Fahrzustand vorherzusagen und die Lenkkraft zu beeinflussen. Damit soll der Fahrer aktiv dazu angeregt werden, das Fahrzeug auf einer vorhergesagten, vorausliegenden Fahrbahn zu bewegen. Dem Fahrer werden dazu Informationen in Form von Lenkkräften gegeben. Die Lenkkraft (Lenkraddrehmoment oder Lenkradbetätigungskraft) wird in die vorhergesagte "rechte" Richtung erhöht und in entgegengesetzter Richtung gesenkt, indem die Kennung der Lenkungsunterstützung derart geändert wird, dass ein Korrekturbetrag zu einem Hilfskraftbetrag addiert wird, um die Lenkkraft nach links oder rechts zu erhöhen.

Aus Patent Abstracts of Japan Bd. 2000, Nr.24, 11. Mai 2001- &JP 2001 187582 A(Koyo Seiko Co LDT) 10. Juli 2001 ist eine servounterstützte Lenkung bekannt, die bei einer Soll-Ist-Abweichung des Fahrzeugkurses das Lenkmoment der servounterstützten Lenkung in Abhängigkeit von der Abweichung des Fahrzeugkurses verändert.

Weiterhin ist aus der DE 198 41 706 A bekannt, den Fahrzeugkurs mittels Größen einer Fahrdynamikregelung, z.B. eines Lenkwinkelsensors, zu ermitteln.

Diese Systeme haben jedoch den Nachteil, dass die Lenkung nicht mehr so reagiert, wie der Fahrer es gewohnt ist oder es möchte. Denn die Kennung der Servolenkung selbst wird verändert. Das kann dazu führen, dass der Fahrer irritiert wird und aufgrund der ihm ungewohnten Lenkcharakteristik das Fahrzeug nicht mehr vollständig beherrscht.

Aufgabe der Erfindung ist es daher, ein Verfahren und eine Vorrichtung anzugeben, das/die es ermöglicht, die vom Fahrer gewohnte Lenkungscharakteristik weitgehend zu erhalten, aber ihn zugleich in seiner Lenktätigkeit unterstützt.

Diese Aufgabe wird mit den Merkmalen der unabhängigen Ansprüche gelöst. Abhängige Ansprüche sind auf bevorzugte Ausführungsformen der Erfindung gerichtet.

Das Verfahren beinhaltet die Ermittlung einer Sollbewegung oder eines Sollwegs, dem das Fahrzeug folgen soll. Dazu werden Umgebungsdaten einer momentanen Verkehrssituation erfasst und/oder abgeschätzt und ggf. nach Maßgabe der Umgebungsdaten eine Vorhersage der zukünftigen Verkehrsituation durchgeführt und auf Grundlage der momentanen und ggf. vorhergesagten Verkehrssituation eine Sollbewegung oder ein Sollweg ermittelt. Der Ausdruck "Umgebungsdaten einer momentanen Verkehrssituation" ist erfindungsgemäß weit auszulegen und umfasst sämtliche denkbaren Informationen, die nicht das Fahrzeug oder die Fahrsituation selbst, sondern der Umgebung des Fahrzeugs beschreiben. Vorzugsweise werden als Umgebungsdaten zumindest der Fahrbahnverlauf erfasst oder abgeschätzt.

Des weiteren wird die Istbewegung des Fahrzeugs ermittelt. Es werden dazu die momentanen Bewegungsdaten des Fahrzeugs erfasst und oder abgeschätzt. Unter dem Begriff "Bewegungsdaten" sind sämtliche denkbaren Informationen zu verstehen, die das Fahrzeug oder die Fahrsituation beschreiben. Als Bewegungsdaten wird vorzugsweise zumindest der Fahrzeugkurs erfasst oder abgeschätzt.

Danach erfolgt eine vergleichende Betrachtung der Sollbewegung oder des Sollwegs und des Istwegs oder der Istbewegung auf Grundlage eines Vergleichs der erfassten oder abgeschätzten Umgebungsdaten mit den Bewegungsdaten des Fahrzeugs. Der Vergleich kann vorzugsweise auf zwei Wegen durchgeführt werden:

Zum einen kann aus dem Sollweg eine Sollbewegung ermittelt werden, die das Fahrzeug durchführen soll, um den Sollweg einzuhalten. Erfindungsgemäß wird daher eine Sollbahn und ein Sollbahnwinkel aus dem erfassten oder abgeschätzten Fahrbahnverlauf sowie eine Istbahn und ein Istbahnwinkel aus dem erfassten oder abgeschätzten Fahrzeugkurs ermittelt. Danach kann ein Vergleich zwischen der Sollbewegung (Sollbahn bzw. Sollbahnwinkel) und der Istbewegung (Istbahn bzw. Istbahnwinkel) durchgeführt werden, was als Ergebnis einen Bewegungsunterschied liefert.

Eine andere Möglichkeit besteht darin, aus der Istbewegung einen "Istweg" zu extrapolieren, dem das Fahrzeug aufgrund der Istbewegung folgen würde. Danach kann ein Vergleich zwischen dem Sollweg und diesem Istweg durchgeführt werden, was als Ergebnis einen Wegunterschied liefert.

Wesentlich für die Erfindung ist es, dass das Ergebnis der vergleichenden Betrachtung verwendet und die Unterstützung der Lenkhandhabe nach Maßgabe des Vergleichs verändert wird, indem der Nullpunkts der Kennlinie für die Unterstützung der Lenkhandhabe nach Maßgabe des Vergleichs verschoben wird. Eine Verschiebung des Nullpunkts im Sinne der Erfindung bedeutet eine horizontale Verschiebung einer bezüglich der Geradeausfahrt spiegelsymmetrischen Funktion des Verstärkungsmoments gegen das vom Fahrer aufgebrachten Lenkmoment ohne Reglabweichung des Verstärkungsmoments. Somit wird dem Fahrer ein Hinweis gegeben für eine Bewegung der Lenkhandhabe in Richtung einer Angleichung des Fahrzeugkurses an den Fahrbahnverlauf, indem das für ihn gewohnte "Lenkradgefühl" für eine Geradeausfahrt sich bei einer bestimmten Winkelstellung der Fahrzeugräder einstellt. Durch die gleichbleibende Grundunterstützungsfunktion erfährt der Fahrer keine Veränderung der Lenkcharakteristik, wodurch er nicht verunsichert wird, aber trotzdem einen eindeutigen Hinweis über eine vorteilhafte Lenkradstellung erhält. Der Fahrer wird im Sinne einer Korrektur der augenblicklichen Istbahn bzw. des Istbahnwinkels in Richtung der Sollbahn bzw. des Sollbahnwinkels unterstützt. Es ist dabei zu beachten, dass der ermittelte Sollweg nicht immer der ideale Weg oder der Weg ist, dem der Fahrer folgen möchte. Es bleibt daher dem Fahrer überlassen, die ihm übermittelte Information zu nutzen, um das Fahrzeug auf den Sollweg zu führen oder das Fahrzeug auf einen anderen von ihm gewünschten Weg zu lenken.

Erfindungsgemäß ist es vorgesehen, dass die Erfassung der Umgebungsdaten der Verkehrssituation mit zumindest einem bildverarbeitenden System, insbesondere über geeignete optische Sensoren, wie Infrarot-Sensoren oder vorzugsweise eine Video-Kamera, erfolgt. Diese erfassen z. B. die Fahrbahnlinien oder ein vorausfahrendes Fahrzeug und geben entsprechende Signale an eine Bildverarbeitung weiter. Diese ermittelt daraus den Sollweg, wie z. B. die Ortskoordinaten in bezug auf die Fahrzeugkoordinaten. Dabei kann der Sollweg ein Ortspunkt, eine Punktfolge, ein Vektor oder eine Trajektorie sein.

Als Bewegungsdaten des Fahrzeugs, vorzugsweise des Fahrzeugkurses, wird erfindungsgemäß der Lenkwinkel, die Giergeschwindigkeit oder die Querbeschleunigung, d.h. die jeweiligen Komponenten um die Hochachse des Fahrzeugs, oder auch entsprechende Komponenten in Fahrzeuglängsrichtung betreffen, erfasst oder abgeschätzt. Somit kann die Istbewegung von mehreren Parametern abhängig sein bzw. mehrere Komponenten aufweisen. Vorzugsweise werden die Bewegungsdaten des Fahrzeugs zumindest mit einem Lenkwinkelsensor erfasst, der zumindest annähernd die momentane Stellung der lenkbaren Fahrzeugräder sensiert. Erfindungsgemäß ist es vorgesehen, dass weitere fahrdynamische Größen, insbesondere fahrdynamische Größen einer Fahrdynamikregelung eines elektronischen Bremsenregelungssystems (ESP-System), bei der Änderung der Unterstützung der Lenkhandhabe mitberücksichtigt werden. Zum Ermitteln der Istbewegung wird demnach erfindungsgemäß eine im Fahrzeug vorhandene Sensorik einer elektronischen Fahrdynamikregelung verwendet.

Erfindungsgemäß ist es vorgesehen, dass die aktuelle Fahrzeuggeschwindigkeit mitberücksichtigt wird.

Erfindungsgemäß ist es vorgesehen, dass die aktuelle Betätigung der Lenkhandhabe durch den Fahrer ermittelt oder abgeschätzt wird und im Fall, wenn erkannt wurde, dass der Fahrer die Lenkhandhabe losgelassen hat, eine Änderung der Unterstützung der Lenkhandhabe nicht erfolgt.

Nach der Erfindung wird die Änderung der Unterstützung der Lenkhandhabe zusätzlich unterstützt durch eine entsprechende Bremsenregelung, das bedeutet durch eine zusätzliche Ansteuerung mindestens einer Radbremse. Dieses ist vorzugsweise eine Radbremse an der Vorderachse des Fahrzeugs, da dort der Anteil an der gesamten Bremsung des Fahrzeugs bei ca. 70 bis 80 % liegt. Vorzugsweise wird der Bremsdruck an der Radbremse angehoben, um das Fahrzeug in eine andere Richtung, z. B. zum Sollweg hin zu lenken. Wird das Fahrzeug bereits abgebremst, so kann auch an einer Radbremse der Bremsdruck angehoben und an der anderen Radbremse derselben Achse der Bremsdruck abgesenkt werden. Vorzugsweise erfolgt das Absenken und gleichzeitige Anheben des Bremsdruckes derart, dass das Fahrzeug nicht weniger als zuvor abgebremst wird.

Die Bremsdruckerhöhung kann dabei weniger als 30 bar betragen und die Geschwindigkeit der Bremsdruckerhöhung (Bremsdruckgradient) kann im Bereich von 10 bis 20 bar/s liegen. Dieses bewirkt, dass der Fahrer nur ein leichtes Auslenken des Fahrzeugs verspürt, das Fahrzeug aber nicht stark von seinem derzeitigen Weg abweicht. Dadurch wird dem Fahrer lediglich mitgeteilt, dass er den ermittelten Sollweg verlässt. Der Fahrer kann jedoch weiterhin das Fahrzeug vollständig kontrollieren und weiterhin seinem Wunsch entsprechend das Fahrzeug lenken.

Ist der Fahrer abgelenkt und verlässt deshalb den Sollweg, so kann es zweckmäßig sein, ihn zu alarmieren. Dieses kann durch ein ruckartiges Bremsen geschehen, was durch einen Bremsdruckgradienten erreicht werden kann, der größer als 100 bar/s ist. Dadurch wird das Fahrzeug kurzzeitig kräftiger abgebremst, was für den Fahrer unangenehm ist, so dass er "aufwacht" und seine Aufmerksamkeit wieder dem Fahrvorgang widmet.

Erfindungsgemäß ist es vorgesehen, dass mittels der Bremsenregelung eine Fremddruckquelle ansteuerbar ist, die unabhängig von der durch ein Bremspedal durch den Fahrer vorgegebenen Bremswunsch einen bestimmten Bremsdruck erzeugen kann. Vorzugsweise steuert die Bremsensregelung eine elektrohydraulische Bremse.

Die Aufgabe wird ferner durch ein gattungsgemäßes Fahrer-Assistenzsystems eines Fahrzeugs gelöst, bei dem das Lenkradunterstützungs-Beeinflussungsmittel ein Nullpunktsverschiebemittel aufweist, zwecks Verschiebung des Nullpunkts der Kennlinie für die Unterstützung der Lenkhandhabe nach Maßgabe des Vergleichs.

Nach der Erfindung ist es vorgesehen, dass das Fahrer-Assistenzsystem ein Sollbahnerfassungsmittel zum Ermitteln einer Sollbahn bzw. eines Sollbahnwinkels aus dem erfassten oder abgeschätzten Fahrbahnverlauf, ein Istbahnerfassungsmittel zum Ermitteln einer Istbahn und eines Istbahnwinkels aus dem erfassten oder abgeschätzten Fahrzeugkurs, ein Vergleichsmittel zum Vergleichen der Sollbahn und des Sollbahnwinkels mit der Istbahn und dem Istbahnwinkel aufweist, und dass das Nullpunktsverschiebemittel dafür vorgesehen ist, den Nullpunkts der Kennlinie für die Unterstützung der Lenkhandhabe nach Maßgabe des Vergleichs zu verschieben.

Die Erfindung wird in der nachfolgenden Beschreibung unter Bezugnahme auf die Abbildungen (Fig.1 bis Fig.5) näher beispielhaft nährt erläutert.
Fig.1 zeigt schematisch ein Fahrzeug mit einem System zur Fahrzeugsteuerung mit einem Fahrerassistenzsystem nach der Erfindung.
In der Fig.2 sind die bei der Spurführung bzw. -haltung herrschenden geometrischen Größen dargestellt.
Fig.3 zeigt ein Blockdiagramm des Verfahrens zur Realisierung der Lenkassistenzfunktion.
In der Fig.4 ist die Berechnung des in Lenkassistenzzusatzmoment und des Servomoments näher dargestellt.
Fig.5 zeigt resultierende Verschiebungen der Kennlinie der Servolenkung zur Unterstützung des Fahrers.

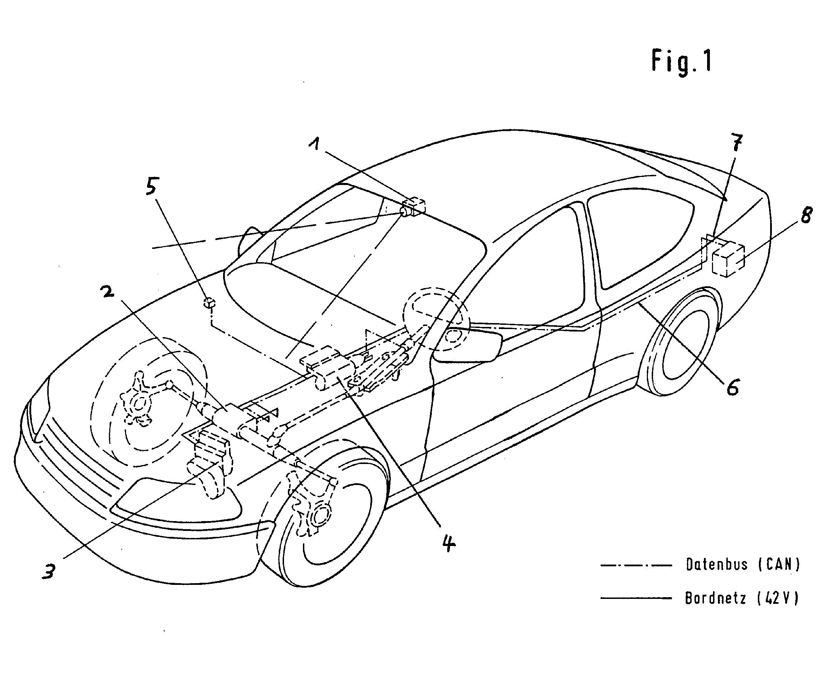

Das in Fig.1 gezeigte System weist als wesentliche Komponenten eine CCD-Kamera 1 zur Erfassung des Fahrzeugumfeldes, insbesondere des Fahrspurverlaufes, eine elektrische Servolenkung (EPAS) 2, die neben der Servolenkungs-Basisfunktion eine Lenkassistenzfunktion zur Spurführung beinhaltet, sowie eine elektrohydraulische Bremsanlage (EHB) 3, zur Realisierung auch vom Fahrer unabhängiger Bremseingriffe, auf. Die EHB-Anlage eröffnet die Möglichkeit, zusätzlich Abstandsregelfunktionen auf technisch einfache Weise zu realisieren. Die Steuerung bzw. Regelung der Lenkunterstützung und der Bremsanlage erfolgt durch eine Steuerungseinheit 4. Diese ist über eine Motorraumschnittstelle 5 mit dem Antriebsmotor des Fahrzeugs verbunden und kann von der Motorsteuerung Signale empfangen oder Signale an diese senden. Die Komponenten sind durch ein Fahrzeugbussystem, wie CAN-Datenbus (gestrichpunktete Linien 6) verbunden und werden über eine Versorgungsleitung 7 mit elektrischem Strom versorgt. Als elektrische Energiequelle ist hier eine Fahrzeugbatterie 8 mit einer hohen elektrischen Spannung von 36 bis 42 Volt, vorgesehen. Insbesondere für elektrische Aktuatoren mit hohem Stromverbrauch, wie Elektromotoren für eine direkte Lenkungsunterstützungsfunktion, ist eine hohe Versörgungsspannung vorteilhaft oder gar notwendig (für große und schwere Fahrzeuge).

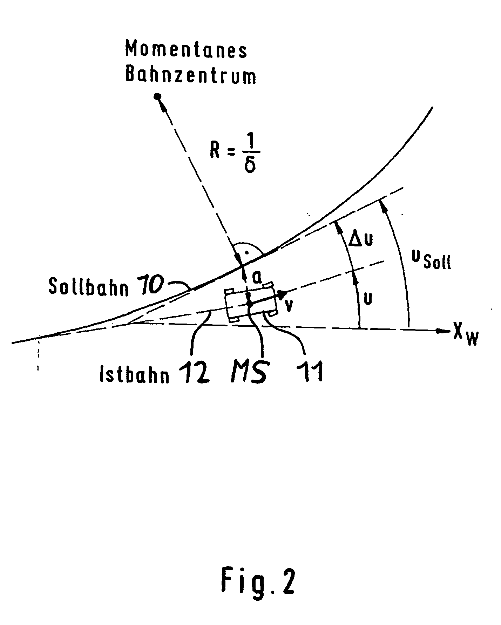

Die bei der Spurführung bzw. -haltung herrschenden geometrischen Größen sind in Fig.2 dargestellt. Die Sollbahn 10 besitzt einen aktuellen Bahnradius R bzw. eine Bahnkrümmung r = 1/R. Das Fahrzeug 11 bewegt sich mit einer Geschwindigkeit v auf einer Istbahn 12, wobei sich der Schwerpunkt MS in einem Abstand a von der Sollbahn 10 befindet. Der durch die erfasste gegenwärtige Sollbahn 10 definierte Sollkurswinkel ist mit u_{Soll} bezeichnet, der vom Fahrzeug beschriebene Istkurswinkel repräsentiert u. Mit Hilfe der Lenkassistenzfunktion wird der Abstand a sowie den Bahndifferenzwinkel Δu = u_{Soll} - u minimiert.

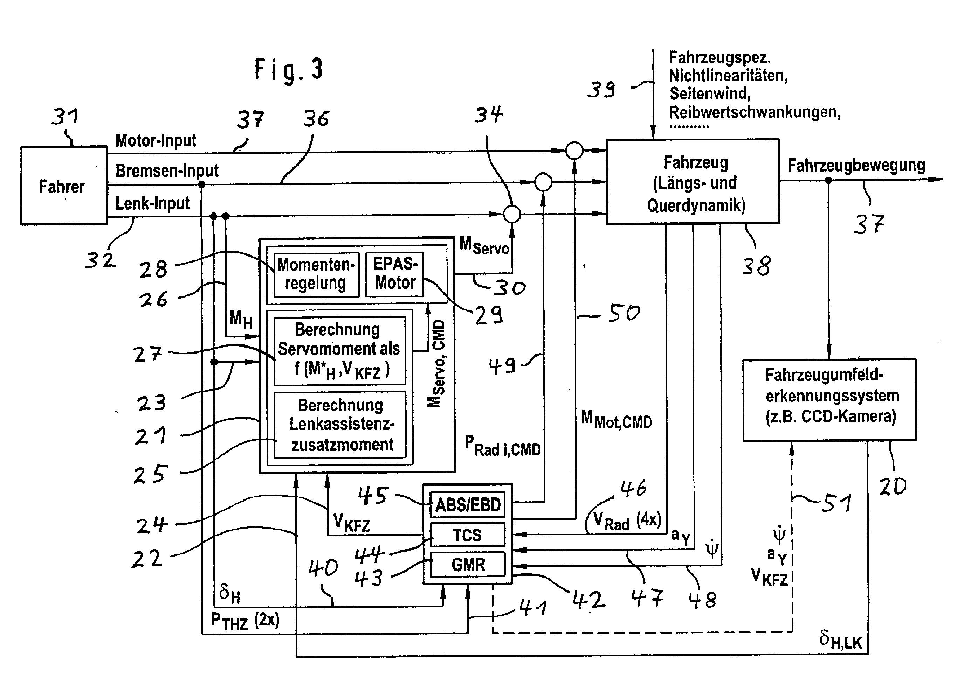

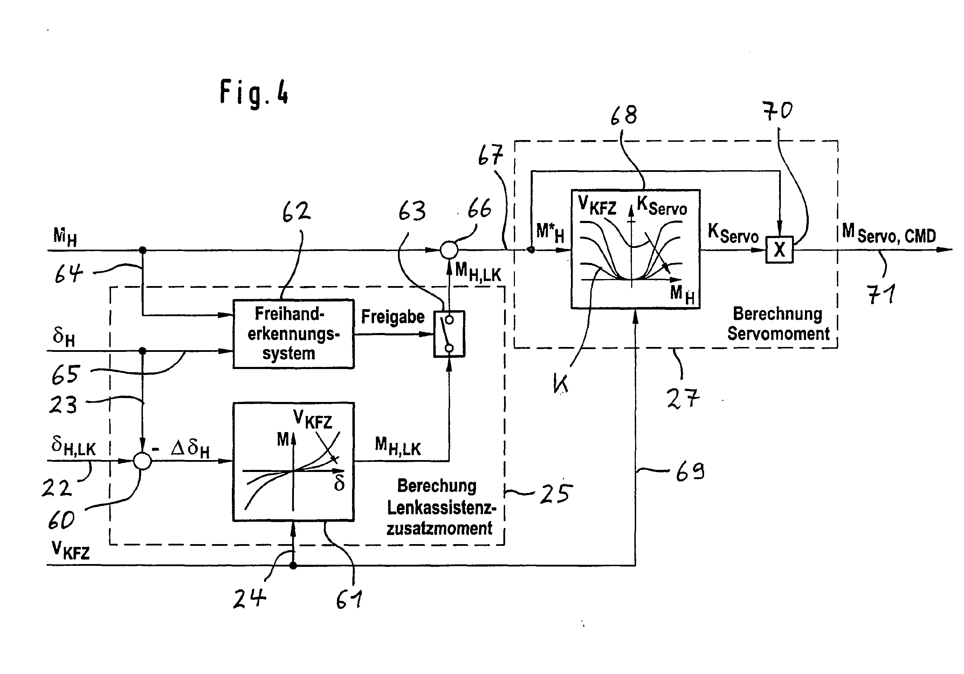

Das Blockdiagramm zur Realisierung der Lenkassistenzfunktion zur Spurführung ist in Fig.3 und Fig.4 dargestellt. Grundgedanke ist dabei, dass bei einer festgestellten Abweichung vom Sollkurs 10 der Fahrer mit Hilfe des Assistenzsystems durch eine (Nullpunkt-) Verschiebung der Lenkungsverstärkerkennlinie veranlasst und dabei gleichzeitig unterstützt wird, den gegenwärtigen Lenkwinkel u zu korrigieren und das Lenkrad in Richtung des zur Einhaltung des durch die Umgebung (Straße) gegebenen Kurses notwendigen Lenkradwinkel uₛₒₗₗ zu bewegen. Diese Verschiebung entspricht auch einer Nullpunktverschiebung des Lenkgefühls bei einer Geradeausfahrt.

Fig.3 zeigt, dass ein bildverarbeitendes System, ein Fahrzeugumfelderkennungssystem 20, wie CCD Kamera 1 in FIG.1, das Umfeld des Fahrzeuges, insbesondere die zu minimierenden Größen a und Δu, erfasst und ggf. mittels weiterer fahrdynamischer Größen einen zur Spurhaltung einzustellenden Lenkwinkel δ_{H,LK} ermittelt und diesen dem Assistenzsystem 21 übermittelt 22. Als weitere Eingangsgröße wird diesem der vom Fahrer tatsächlich eingestellten Lenkwinkel δ_{H} 23 und die aktuellen Fahrzeuggeschwindigkeit V_{KFZ} 24 zugeführt. Das Assistenzsystem 21 bestimmt aus der Differenz Δδ zwischen dem erforderlichen Lenkwinkel δ_{H,LK} und dem vom Fahrer tatsächlich eingestellten Lenkwinkel δ_{H} unter Berücksichtigung der aktuellen Fahrzeuggeschwindigkeit V_{KFZ} ein Lenkassistenzzusatzmoment 25. Das Lenkassistenzzusatzmoment stellt somit ein "angepasstes" Handmoment M_{H},_{LK} dar, das dem vom Fahrer am Lenkrad aufgebrachten Handmoment M_{H} 26 additiv, im Sinne einer Assistenz für den Fahrer überlagert wird und damit die Nullpunktverschiebung bewirkt. Daraus resultiert ein Moment M*_{H}. Aus diesem resultierenden Moment M*_{H} wird unter Berücksichtigung der Fahrzeuggeschwindigkeit V_{KFZ} ein Servomoment berechnet 27 und unter Berücksichtigung der Servolenkungs-Basisfunktion zu einem Servomoment M_{Servo,CMD} verstärkt 27. Mittels der Momentenregelung 28 wird er Servolenkungsmotor 29 entsprechend dem gewünschten Moment angesteuert und erzeugt ein Unterstützungsmoment M_{Servo} 30 für den Fahrer 31, um dessen Lenktätigkeit 32 zu unterstützen 34. Die Fahrzeugdynamik 35 wird außer der Lenktätigkeit 32 des Fahrers 31 auch durch eine Bremsenbetätigung 36 und den Fahrzeugantriebsmotor 37 beeinflusst. Weiter Einflussfaktoren für die gesamte Fahrzeugbewegung 38 sind äußere Bedingungen 39, wie fahrzeugspezifische Nichtlinearitäten, Seitenwind und Reibwertschwankungen.

Der vom Fahrer 31 tatsächlich eingestellten Lenkwinkel δ_{H} 23 und der vom Fahrer vorgegebene Bremsdruck P_{THZ} werden als Eingangsgrößen 40,41 einem Bremsenregelungssystem 42 zugeführt. Das Bremsenregelungssystem 42 weist hier eine Giermomentenregelung 43, eine Antriebsschlupfregelung 44 und ein Antiblockiersystem mit elektronischer-Bremskraftverteilung 45 auf. Auch die aktuelle Fahrzeuggeschwindigkeit V_{KFZ} 24 wird hier ermittelt. Dem Bremsenregelungssystem 45 werden ferner Raddrehzahlsignale V_{Rad} 46, Querbeschleunigungssignale 47 und Giermonentensignale Ψ 48 zugeführt. Auf Grundlage der Eingangssignale 40, 41, 46, 47, 48 erzeugt das Bremsenregelungssystem 45 Ausgangssignale 49, 50 zur Beeinflussung des Bremsdrucks 49 und der Motorregelung 50. Die Giermonentensignale Ψ, Querbeschleunigungssignale a_{Y} und Fahrzeuggeschwindigkeit V_{KFZ} wird auch dem Fahrzeugumfelderkennungssystem 20 zugeführt 51.

In der Fig.4 sind die Berechnung des Lenkassistenzzusatzmoment 25 und des Servomoments 27 genauer dargestellt. Das Assistenzsystem 21 bestimmt aus der Differenzbildung 60 zwischen dem erforderlichen Lenkwinkel δ_{H,LK} 22 und dem vom Fahrer tatsächlich eingestellten Lenkwinkel δ_{H} 23 unter Berücksichtigung 61 der aktuellen Fahrzeuggeschwindigkeit V_{KFZ} 24 ein "angepasstes" Handmoment M_{H,LK}. Die erfindungsgemäße Verschiebung der Lenkungsverstärkerkennlinie wird vorteilhaft nur dann vorgenommen, wenn sichergestellt ist, dass der Fahrer das Lenkrad nicht losgelassen hat. Eine entsprechende Freihanderkennung 62 gibt daher das ermittelte Zusatzmoment M_{H},_{LK} nur dann frei 63, wenn erkannt wird, dass der Fahrer das Lenkrad auch festhält. Erkannt wird dies anhand kleiner niederfrequenter Schwingungen des Lenkmomentensignals M_{H} 64, die durch ständige minimale Korrekturen des Fahrzeugkurses durch den Fahrer verursacht werden. Auf Grundlage des ebenfalls erfassten Lenkradwinkels δ_{H} wird die Freihanderkennung zusätzlich abgesichert und überprüft 65.

Das vom Fahrer am Lenkrad aufgebrachten Handmoment M_{H} 26 wird dem (freigegebenen) Zusatzmoment M_{H,LK} im Sinne einer Assistenz für den Fahrer additiv überlagert. Daraus resultiert ein Moment M*_{H} 67. Aus diesem resultierenden Moment M*_{H} wird unter Berücksichtigung der Servolenkungs-Basisfunktion 68 und der Fahrzeuggeschwindigkeit V_{KFZ} 69 eine bestimmte Kennlinie K der ermittelt. Aus der gewünschten Servounterstützung K_{Servo} und dem resultierenden Moment M*_{H} erfolgt dann die Ermittlung 70 des Servomoments M_{Servo,CMD} 71, mit welchem über die Momentenregelung 28 des Servolenkungs-Eektromotors 29 die Lenkungstätigkeit des Fahrers unterstützt wird.

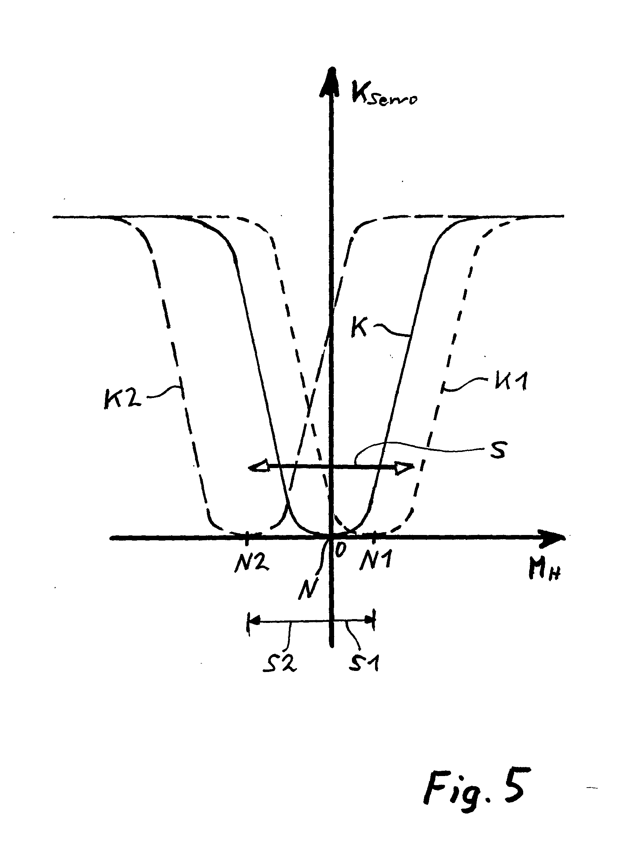

Die aus der Überlagerung des vom Fahrer am Lenkrad aufgebrachten Handmoments M_{H} mit dem Zusatzmoment M_{H,LK} im resultierende Verschiebung der Kennlinie ist in Fig.5 dargestellt. Die Auftragung in Fig. 5 zeigt die Kennlinie für die Servounterstützung K,K1,K2 für drei verschiedene Fahrsituationen. Ohne Assistenzfunktion erfährt der Fahrer die bekannte Unterstützung durch die Kennlinie K. Die Kennlinie ist eine spiegelsymmetrischen Funktion bezüglich der Geradeausstellung der Räder (Geradeausfahrt des Fahrzeugs, Nullpunkt N). Mit Zunahme des Handlenkmoments M_{H} erfolgt eine zunehmende Servounterstützung entsprechend der Kennlinie K, wodurch für den Fahrer zur Lenkradbetätigung geringere Kräfte am Lenkrad aufzubringen sind.

Entsprechend der Erfindung wird der Fahrer in seiner Lenktätigkeit unterstützt und auf eine Lenkbewegung in Richtung einer Angleichung des Fahrzeugkurses an den Fahrbahnverlauf hingewiesen, indem der Nullpunkt horizontal (auf der Achse des Handmoments M_{H}) entsprechend verschoben wird (Pfeil S). Soll der Fahrer beispielsweise das Lenkrad (stärker) nach rechts drehen, wird die Kennlinie nach rechts verschoben. Damit wird die "Nullstellung" des Lenkrads, die eine Geradeausstellung der Räder kennzeichnet, bei einer bestimmten Stellung der lenkbaren Fahrzeugräder nach rechts erreicht. Dies ist durch die Kennlinie K1 mit einen um S1 verschobenen Nullpunkt dargestellt. Eine Situation mit einer Verschiebung S2 der Kennlinie K in die linke Richtung zeigt die Kennlinie K2. Die Servolenkungsfunktion bleibt als solche für alle Fahrsituationen unverändert, so dass das für den Fahrer gewohnte Lenkungsgefühl erhalten bleibt. Er wird daher nicht verunsichert, erfährt aber trotzdem einen eindeutigen Hinweis über eine vorteilhafte Lenkradstellung.

## Patentansprüche

1. Verfahren zum Betreiben eines Fahrer-Assistenzsystems (21) eines Fahrzeugs, insbesondere eines Kraftfahrzeugs (11), mit einer servounterstützten Lenkung (2), bei dem Umgebungsdaten einer momentanen Verkehrssituation erfasst oder abgeschätzt werden, momentane Bewegungsdaten des Fahrzeugs (11) erfasst oder abgeschätzt werden und die erfassten oder abgeschätzten Umgebungsdaten mit den Bewegungsdaten des Fahrzeugs verglichen werden, **dadurch gekennzeichnet, dass** die aktuelle Betätigung der Lenkhandhabe durch den Fahrer ermittelt oder abgeschätzt wird und im Fall, wenn erkannt wurde, dass der Fahrer die Lenkhandhabe betätigt, der Nullpunkt der Kennlinie (K) für die Unterstützung der Lenkhandhabe nach Maßgabe des Vergleichs verschoben wird und im Fall, wenn erkannt wurde, dass der Fahrer die Lenkhandhabe losgelassen hat, eine Änderung der Unterstützung der Lenkhandhabe nicht erfolgt.

2. Verfahren nach Anspruch 1,
**dadurch gekennzeichnet, dass** als Umgebungsdaten zumindest der Fahrbahnverlauf erfasst oder abgeschätzt wird.

3. Verfahren nach Anspruch 1 oder 2,
**dadurch gekennzeichnet, dass** als Bewegungsdaten des Fahrzeugs (11) zumindest ein Fahrzeugkurs erfasst oder abgeschätzt wird.

4. Verfahren nach einem der Ansprüche 1 bis 3,
**dadurch gekennzeichnet, dass** die Umgebungsdaten mit zumindest einem bildverarbeitenden System, insbesondere eine Kamera (1), erfasst werden.

5. Verfahren nach einem der Ansprüche 1 bis 4,
**dadurch gekennzeichnet, dass** die Bewegungsdaten des Fahrzeugs zumindest mit einem Lenkwinkelsensor erfasst werden, der zumindest annähernd die momentane Stellung der lenkbaren Fahrzeugräder erfasst.

6. Verfahren nach einem der Ansprüche 1 bis 5,
**dadurch gekennzeichnet, dass** die aktuelle Fahrzeuggeschwindigkeit mitberücksichtigt wird.

7. Verfahren nach einem der Ansprüche 3 bis 6,
**dadurch gekennzeichnet, dass** eine Sollbahn (10) bzw. ein Sollbahnwinkel (uₛₒₗₗ) aus dem erfassten oder abgeschätzten Fahrbahnverlauf ermittelt wird, eine Istbahn (12) bzw. ein Istbahnwinkel (u) aus dem erfassten oder abgeschätzten Fahrzeugkurs ermittelt wird, die Sollbahn (10) bzw. der Sollbahnwinkel (uₛₒₗₗ) mit der Istbahn (12) bzw. dem Istbahnwinkel (u) verglichen wird und der Fahrer zur Korrektur der augenblicklichen Istbahn (12) bzw. des Istbahnwinkels (u) in Richtung der Sollbahn (uₛₒₗₗ) bzw. des Sollbahnwinkels (u) unterstützt wird.

8. Verfahren nach einem der Ansprüche 1 bis 7,
**dadurch gekennzeichnet, dass** weitere, fahrdynamische Größen, insbesondere fahrdynamische Größen einer Fahrdynamikregelung eines elektronischen Bremsenregelungssystems (3), bei der Änderung der Unterstützung der Lenkhandhabe mitberücksichtigt werden.

9. Verfahren nach einem der Ansprüche 1 bis 8,
**dadurch gekennzeichnet, dass** die Änderung der Unterstützung der Lenkung zusätzlich unterstützt wird durch eine entsprechende Bremsenregelung, vorzugsweise eine Bremsenregelegung eines elektrohydraulische Bremssystems (3)

10. Fahrer-Assistenzsystems eines Fahrzeugs (11) insbesondere eines Kraftfahrzeugs, mit einer servounterstützten Lenkung (2) das ein Erfassungsmittel zum Erfassen oder Abschätzen von Umgebungsdaten einer momentanen Verkehrssituation, vorzugsweise Fahrbahnverlauferfassungsmittel, und ein Erfassungsmittel zum Erfassen oder Abschätzen von momentanen Bewegungsdaten des Fahrzeugs (11), vorzugsweise ein Fahrzeugkurserfassungmittel, ein Vergleichsmittel zum Vergleichen der erfassten oder abgeschätzten Umgebungsdaten mit den Bewegungsdaten des Fahrzeugs (11), und ein Lenkradunterstützungs-Beeinflussungsmittel zur Änderung der Unterstützung einer Lenkhandhabe nach Maßgabe des Vergleichs aufweist,
**dadurch gekennzeichnet, dass** das Lenkradunterstützungs-Beeinflussungsmittel eine Nullpunktsverschiebemittel und eine Freihanderkennung aufweist, wobei das Nullpunksverschiebemittel eine Verschiebung des Nullpunkts der Kennlinie (K) für die Unterstützung der Lenkhandhabe nach Maßgabe des Vergleichs bei einer fahrerbetägtigten Lenkhandhabe durchführt, welche Freihanderkennung die fahrerbetätigte Lenkhandhabe erkennt und bei Loslassen der Lenkhandhabe eine Änderung der Unterstützung der Lenkhandhabe nicht freigibt.

11. Fahrer-Assistenzsystem nach Anspruch 10,
**dadurch gekennzeichnet, dass** das Fahrer-Assistenzsystem ein Sollbahnerfassungsmittel zum Ermitteln einer Sollbahn (10) bzw. eines Sollbahnwinkels (uₛₒₗₗ) aus dem erfassten oder abgeschätzten Fahrbahnverlauf, ein Istbahnerfassungsmittel zum Ermitteln einer Istbahn (12) und eines Istbahnwinkels (u) aus dem erfassten oder abgeschätzten Fahrzeugkurs, ein Vergleichsmittel zum Vergleichen der Sollbahn (10) und des Sollbahnwinkels (uₛₒₗₗ) mit der Istbahn (12) und dem Istbahnwinkel (u) aufweist, und dass das Nullpunktsverschiebemittel dafür vorgesehen ist, den Nullpunkts der Kennlinie (K) für die Unterstützung der Lenkhandhabe nach Maßgabe des Vergleichs zu verschieben.

## Claims

1. Method for operation of a driver-assist system (21) of a vehicle, especially a motor vehicle (11), with a servo-assisted steering (2) in which the environmental data of an instantaneous traffic situation are detected or estimated, instantaneous movement data of the vehicle (11) are detected or estimated, and the detected or estimated environmental data are compared with the movement data of the vehicle,
**characterized in that** the actual steering action by the driver is determined or estimated, and in the case it was detected that the driver actuates the steering wheel, the zero point of the characteristic curve (K) for the steering action assistance is displaced according to said comparison, and in the case it was detected that the driver had taken his hands off the steering wheel, the assistance of the steering action is not changed.

2. Method according to claim 1,
**characterized in that** at least the road course is detected or estimated as environmental data.

3. Method according to claim 1 or 2,
**characterized in that** at least one vehicle course is detected or estimated as movement data of the vehicle (11).

4. Method according to any one of the claims 1 to 3,
**characterized in that** the environmental data are detected by at least one image-processing system, in particular a camera (1).

5. Method according to any one of the claims 1 to 4,
**characterized in that** the movement data of the vehicle are detected at least with a steering angle sensor detecting at least approximately the instantaneous position of the steerable vehicle wheels.

6. Method according to any one of the claims 1 to 5,
**characterized in that** the actual vehicle speed is taken into consideration.

7. Method according to any one of the claims 3 to 6,
**characterized in that** a nominal course (10) and/or an angle of the nominal course (Uₙₒₘᵢₙₐₗ) is determined from the detected or estimated road course, an actual course (12) and/or an angle of the actual course (U) is determined on the basis of the detected or estimated vehicle course, the nominal course (10) and/or the nominal course angle (Uₙₒₘᵢₙₐₗ) is compared with the actual course (12) and/or the actual course angle (U), and the driver is assisted in correcting the current actual course (12) and/or the actual course angle (U) in the direction of the nominal course (10) and/or nominal course angle (Uₙₒₘᵢₙₐₗ).

8. Method according to any one of the claims 1 to 7,
**characterized in that** further driving-dynamics quantities, especially driving-dynamics quantities of a driving dynamics control of an electronic brake control system (3) are taken into consideration when changing the assistance of the steering action.

9. Method according to any one of the claims 1 to 8,
**characterized in that** the change of the steering assistance is additionally supported by a corresponding brake control, preferably a brake control of an electro-hydraulic brake system (3).

10. Driver-assist system of a vehicle (11), in particular a motor vehicle, with a servo-assisted steering (2) including a means for detecting or estimating environmental data of an instantaneous traffic situation, preferably a means for detecting the road course, and a means for detecting or estimating instantaneous movement data of the vehicle (11), preferably a means for detecting the vehicle course, a comparison means for comparing the detected or estimated environmental data with the movement data of the vehicle (11), and a means for influencing the steering assistance for changing the assistance of a steering action according to the comparison,
**characterized in that** the means for influencing the steering assistance includes a means for displacing the zero point and a hands-off detection, and the means for displacing the zero point performs a displacement of the zero point of the characteristic curve (K) for the steering action assistance according to said comparison when the steering wheel was actuated by the driver, and the hands-off detection detects the driver-actuated steering action and does not release a change of the assistance of the steering action when the driver has taken his hands off the steering wheel.

11. Driver-assist system according to claim 10,
**characterized in that** the driver-assist system includes a means for determining a nominal path (10) and/or a nominal path angle (Uₙₒₘᵢₙₐₗ) on the basis of the detected or estimated road course, a means for determining the actual path (12) and an actual path angle (U) on the basis of the detected or estimated vehicle course, a comparison means for comparing the nominal path (10) and the nominal path angle (Uₙₒₘᵢₙₐₗ) with the actual path (12) and the actual path angle (U), and **in that** the means for displacing the zero point is intended to displace the zero point of the characteristic curve (K) for steering assistance according to said comparison.

## Revendications

1. Procédé d'exploitation d'un système d'assistance au conducteur (21) d'un véhicule, en particulier d'un véhicule automobile (11), avec une direction assistée (2), dans lequel des données ambiantes d'une situation momentanée de la circulation sont relevées ou estimées, des données momentanées de mouvement du véhicule (11) sont relevées ou estimées et les données ambiantes relevées ou estimées sont comparées aux données de mouvement du véhicule, **caractérisé en ce que** l'actionnement actuel de la manette de direction par le conducteur est déterminé ou estimé, et dans le cas où il est reconnu que le conducteur actionne la manette de direction, le point zéro de la courbe caractéristique (4) pour l'assistance de la manette de direction est déplacé en fonction de la comparaison, et dans le cas dans lequel il est reconnu que le conducteur a relâché la manette de direction, il ne se produit pas de modification de l'assistance de la manette de direction.

2. Procédé selon la revendication 1,
**caractérisé en ce qu'**au moins l'allure de la chaussée est relevée ou estimée en tant que données ambiantes.

3. Procédé selon la revendication 1 ou 2,
**caractérisé en ce qu'**au moins une trajectoire (11) du véhicule est relevée ou estimée comme donnée de mouvement du véhicule (11).

4. Procédé selon l'une des revendications 1 à 3,
**caractérisé en ce que** les données ambiantes sont relevées avec au moins un système de traitement d'image, en particulier une caméra (1).

5. Procédé selon l'une des revendications 1 à 4,
**caractérisé en ce que** les données de mouvement du véhicule sont relevées au moins avec un capteur d'angle de direction qui détecte au moins approximativement la position momentanée des roues directrices du véhicule.

6. Procédé selon l'une des revendications 1 à 5,
**caractérisé en ce que** la vitesse actuelle du véhicule est prise en compte.

7. Procédé selon l'une des revendications 3 à 6,
**caractérisé en ce qu'**une trajectoire de consigne (10) ou un angle de trajectoire de consigne uₛₒₗₗ est déterminé à partir de l'allure relevée ou estimée de la chaussée, une trajectoire réelle (12) ou un angle de trajectoire réelle U est déterminé à partir de la route relevée ou estimée du véhicule, la trajectoire de consigne (10) ou l'angle de trajectoire de consigne Uₛₒₗₗ est comparé à la trajectoire réelle (12) ou à l'angle de trajectoire réelle U, et le conducteur est assisté pour la correction de la trajectoire réelle momentanée (12) ou de l'angle de trajectoire réelle U, en direction de la trajectoire de consigne (10) ou de l'angle de trajectoire de consigne uₛₒₗₗ.

8. Procédé selon l'une des revendications 1 à 7,
**caractérisé en ce que** d'autres grandeurs dynamiques, en particulier des grandeurs dynamiques d'une régulation de la dynamique de conduite d'un système électronique de régulation de frein (3), sont prises en compte lors de la modification de l'assistance de la manette de direction.

9. Procédé selon l'une des revendications 1 à 8,
**caractérisé en ce que** la variation de l'assistance de la direction est soutenue en outre par une régulation de frein correspondante, de préférence une régulation de frein d'un système de frein électrohydraulique (3).

10. Système d'assistance au conducteur d'un véhicule (11), en particulier d'un véhicule automobile, avec une direction assistée (2) qui comporte un moyen de détection pour relever ou estimer des données ambiantes d'une situation momentanée de la circulation, de préférence des moyens de détection de l'allure de la chaussée, et un moyen de détection pour relever ou estimer des données momentanées de mouvement du véhicule (11), de préférence un moyen de détection de la trajectoire du véhicule, un moyen de comparaison pour comparer les données ambiantes relevées ou estimées aux données de mouvement du véhicule (11), et un moyen d'action sur l'assistance du volant pour modifier l'assistance d'une manette de direction en fonction de la comparaison,
**caractérisé en ce que** le moyen d'action sur l'assistance du volant comporte un moyen de déplacement du point zéro et une reconnaissance de main libre, le moyen de déplacement du point zéro exécutant un déplacement du point zéro de la courbe caractéristique K pour l'assistance de la manette de direction en fonction de la comparaison pour une manette de direction actionnée par le conducteur, laquelle reconnaissance de main libre reconnaît la manette de direction actionnée par le conducteur et, en cas de relâchement de la manette de direction, n'autorise pas une variation de l'assistance de la manette de direction.

11. Système d'assistance au conducteur selon la revendication 10,
**caractérisé en ce que** le système d'assistance au conducteur comporte un moyen de détection de la trajectoire de consigne pour déterminer une trajectoire de consigne (10) ou un angle de trajectoire de consigne uₛₒₗₗ à partir de l'allure relevée ou estimée de la chaussée, un moyen de détection de la trajectoire réelle pour déterminer une trajectoire réelle (12) et un angle de trajectoire réelle U à partir de la trajectoire relevée ou estimée du véhicule, un moyen de comparaison pour la comparaison de la trajectoire de consigne (10) et de l'angle de trajectoire de consigne uₛₒₗₗ à la trajectoire réelle (12) et à l'angle de trajectoire réelle U, et **en ce que** le moyen de déplacement du point zéro est prévu pour déplacer le point zéro de la courbe caractéristique K pour l'assistance de la manette de direction en fonction de la comparaison.
